# EUROPÄISCHE PATENTANMELDUNG

(11) **EP 1 465 445 A1**
(43) Veröffentlichungstag der Anmeldung: **06.10.2004**
(21) Anmeldenummer: 03007221.9
(22) Anmeldetag: 31.03.2003
(51) Int. Cl.: H04Q 7/30

(54) **Verfahren und Vorrichtung zur Aufrechterhaltung eines Transcoder-freien-Operations-Modus bei einer End-to-End-Verbindung in einem mobilen Kommunikationsnetz**

(71) Anmelder: SIEMENS AKTIENGESELLSCHAFT, 80333 München (DE)
(72) Erfinder: Kalleitner, Franz, 1220 Wien (AT); Seitter, Norbert, 82008 Unterhaching (DE)

(57) **Zusammenfassung**

Eine einfache und effiziente Möglichkeit zur Aufrechterhaltung eines Transcoder-freien-Operations-Modus wird beschrieben durch Verfahren zur Aufrechterhaltung eines Transcoder-freien-Operations-Modus bei einer End-to-End-Verbindung in einem mobilen Kommunikationsnetz, dadurch gekennzeichnet, dass bei mindestens zwei Verbindungsteilen einer End-to-End-Verbindung an einem Media-Gateway jeweils eine Angabe in einem Übermittlungs-Protokoll betreffend die in den Verbindungen zu verwendenden Codec Modes in einer Verteilereinrichtungs-(MSC)-Steuerung verglichen wird, dass bei unterschiedlichen Angaben betreffend die zu verwendenden Codec Modes eine Signalisierung an ein Trans Break Equipment (TBE) durchgeführt wird und dass von dem Trans Break Equipment für die Verbindungsteile übereinstimmende Codec Modes festgelegt werden.

## Beschreibung

Die Erfindung betrifft ein Verfahren und eine Vorrichtung zur Aufrechterhaltung eines Transcoder-freien-Operations-Modus bei einer End-to-End-Verbindung in einem mobilen Kommunikationsnetz.

Ein mobiles Kommunikationsnetz nach 3GPP Release 4 kann eine End-to-End-Verbindung (Ende-zu-Ende-Verbindung) zwischen zwei Mobilfunkendgeräten in einem Transcoder-freien-Operations-Modus unterstützen. Diese Funktionalität unterstützt die Möglichkeit, Sprache Ende-zu-Ende im gleichen Format zu übermitteln, z. B. AMR-kodiert (Adaptive-Multi-Rate) ohne weitere Transcodier-Schritte, damit die Qualität des Dienstes (Quality of Service (QoS)) aufgrund der Einsparung bei der Zeitverzögerung gesteigert werden kann bzw. die komprimierte Sprachinformation wird unbearbeitet transportiert und somit kommt es zu keinem Verlust der Sprachinformation. AMR basierte Sprach-En-/Decoder verwenden Algorithmen, die die Fähigkeit zum adaptiven Wechseln der Codec Modes, z. B. abhängig von der zur Verfügung stehenden Bandbreiten-Kapazität, haben. Da dies keine Entscheidung für einen einzelnen AMR-En-/Decoder in einer End-to-End-Verbindung ist, müssen Codec-Mode Wechsel mit dem Partner-AMR-En-/Decoder ausgehandelt werden. Hierzu wurde von der Standardisierung ein sogenanntes Benutzer-Plan-Protokoll (User Plan Protocol (UPP)) vorgestellt. Dieses Protokoll spezifiziert während der Initialisierungs-Prozeduren durch Definition der Abbildung zwischen Codec Mode und einem Identifizierer welche Codec Modes ein AMR-Decoder verwenden kann. Zusätzlich sind noch andere UPP-Kontroll-Prozeduren definiert, auf die jedoch hier nicht weiter eingegangen wird.
Das UPP-Protokoll kann als Werkzeug zum Erreichen einer Transcoder-freien-Operation bei allen Gespräch-Szenarien angesehen werden, wie zum Beispiel beim Verbindungsaufbau, während eines Standortwechsels bzw. eines Handovers zu einem anderen Funkkanal oder während verschiedener zusätzlicher Dienste. Das UPP-Protokoll ist hauptsächlich in zwei Funktionalitäten unterteilt, einerseits als bandinternes Protokoll während der Verkapselung der Sprach-Rahmen (frames), dem sogenannten "PDU type 0/1 frames" andererseits als bandexternes Protokoll, den sogenannten "PDU type 14 frames", die für Controlling-Zwecke verwendet werden.
Während der Initialisierungs-Prozeduren (UP-INIT) oder im Fall einer Umschaltung in ein anderes Anruf-Stadium wird eine mögliche Reinitialisierung hauptsächlich durch das Media Gateway (MGW) durchgeführt. Jedoch benötigt das Media Gateway bestimmte Informationen, die von einer Vermittlungseinheit (MSC) über eine Mc I/f - Schnittstelle bereitgestellt werden. Das Ziel dieser Methode ist es, dass die Vermittlungseinheit Informationen über die Initialisierungs-Richtung und der Verbindungsteilnehmer, die initialisiert werden müssen, hat. Die Initialisierungs-Richtung kann einerseits als ankommend bzw. passiven Mode, d. h. es wird auf die Initialisierung gewartet oder andererseits als abgehend bzw. aktiven Mode, d. h. es wird mit der Initialisierung begonnen, spezifiziert werden.
Die Initialisierungs-Seite kann entweder ein Funk-Zugangs-Netzwerk (Radio Access Network (RAN)), d. h. der Initialisierungs-Partner ist ein Funk-Netzwerk-Controller (Radio Network Controller (RNC)) oder ein Kern-Netzwerk (Core Network (CN)), d. h. der Initialisierungs-Partner ist ein vorausgehender Media Gateway, sein. Initialisierung wird mit den PDU type 14 frames ausgeführt und dies kann in einem Media Gateway detektiert werden, das in einem unterstützendem Modus arbeitet (mit aktiviertem TBE = Transcoder Break Equipment). Ein aktiviertes TBE wird bei der Verbindungs-Initialisierungs-Phase oder während jeglicher Art von Codec- bzw. Codec-Mode-Modifikationen in einem Netzwerk eingerichtet. In stabilen Verbindungs-Szenarien kann das TBE auf den transparenten Transmissions-Modus umschalten und dadurch werden keine PDU type 14 frames mehr evaluiert.

Wenn ein Service zwei verschiedene Verbindungsteile verbinden möchte, die stabile Transcoder-freie-Operations-Konditionen haben, könnte eine Benutzer-Plan (UP) Fehlanpassung erfolgen. Diese Fehlanpassung ist möglich, da beide Verbindungsteile unabhängig voneinander aufgebaut wurden. Deshalb können verschiedene Codec Modes gewählt worden sein und zusätzlich kann das Rahmenwerk (RAB subFlow Kombination Indikator Set = RFCI set) des PDU type 0 verschieden sein. Das Rahmenwerk ist abhängig von den gewählten Codec Modes und bezieht sich auf die Ausfallsicherheit bzw. Priorisierung der Sprachrahmen bei der Übertragung über die Luftschnittstelle. Einer Fehlanpassung bei den Codec Modes oder dem RFCI set muss daher eine Modifizierungs-Prozedur folgen.
In der Standardisierung werden aus folgenden zwei Gründen nur die UP-Konditionen in Richtung des RAN aktualisiert. Erstens, es ist schneller beim nahen Mobilfunkendgerät zu aktualisieren, zweitens, das vorausgehende Media Gateway könnte im transparenten Transmissions-Modus arbeiten und muss sich daher daran nicht stören. Dieser Weg der Aktualisierung funktioniert gut, solange ein nahes Mobilfunkendgerät erreichbar ist. Seitdem jedoch Funktionalitäten zusammenarbeiten, kann eine Initialisierung von zwei Kern-Netz-Verbindungsteile stattfinden.

Aufgabe der vorliegenden Erfindung ist es daher, eine Möglichkeit für die Aktualisierung von UP Konditionen in Richtung des Kern-Netzwerks zu geben und damit den Transcoder-freien-Operations-Modus aufrecht zu erhalten.

Die Aufgabe wird erfindungsgemäß durch die Gegenstände der unabhängigen Patentansprüche gelöst. Weiterbildungen der Erfindung sind in den Unteransprüchen angegeben. Kern der Erfindung ist, dass ein Transcoder-freier-Operations-Modus bei mindestens zwei Verbindungsteilen einer End-to-End-Verbindung in einem mobilen Kommunikationsnetz aufrecht erhalten wird. Dies geschieht dadurch, dass eine Angabe in einem Übermittlungs-Protokoll, betreffend die in den Verbindungen zu verwendenden Codec Modes, in einer Verteilereinrichtungs-(MSC)-Steuerung verglichen wird. Bei einer Fehlanpassung werden dann in einen TBE = Transcoder Break Equipment übereinstimmende Codec Modes festgelegt. Der Vorteil dieser Lösung ist, dass eine hohe Sprachqualität bei einer End-to-End-Verbindung durch die Aufrechterhaltung des Transcoder-freien-Operations-Modus garantiert werden kann.

Die Erfindung wird anhand eines in den Figuren dargestellten Ausführungsbeispiels näher erläutert. Im Einzelnen zeigen
- Figur 1: die Ausgangsbedingung mit zwei Verbindungsteilen an einem Media-Gateway,
- Figur 2: die Anfrage zum Verbinden neuer Verbindungsteile von einer agierenden Vermittlungseinrichtungs-(MSC)-Steuerung,
- Figur 3: die Re-Initialisierung im Fall einer Fehlanpassung mit Freigabe der Verbindung in Richtung des Funk-Netzwerk-Controllers (RNC-A),
- Figur 4: mögliche Re-Initialisierung bei der Verbindung zwischen dem vorausgehenden Media-Gateway (MGW (B1)) und dem Funk-Netzwerk-Controller (RNC-B),
- Figur 5: das stabile Gesprächs-Szenario mit dem Transcoder-freien-Operations-Modus.

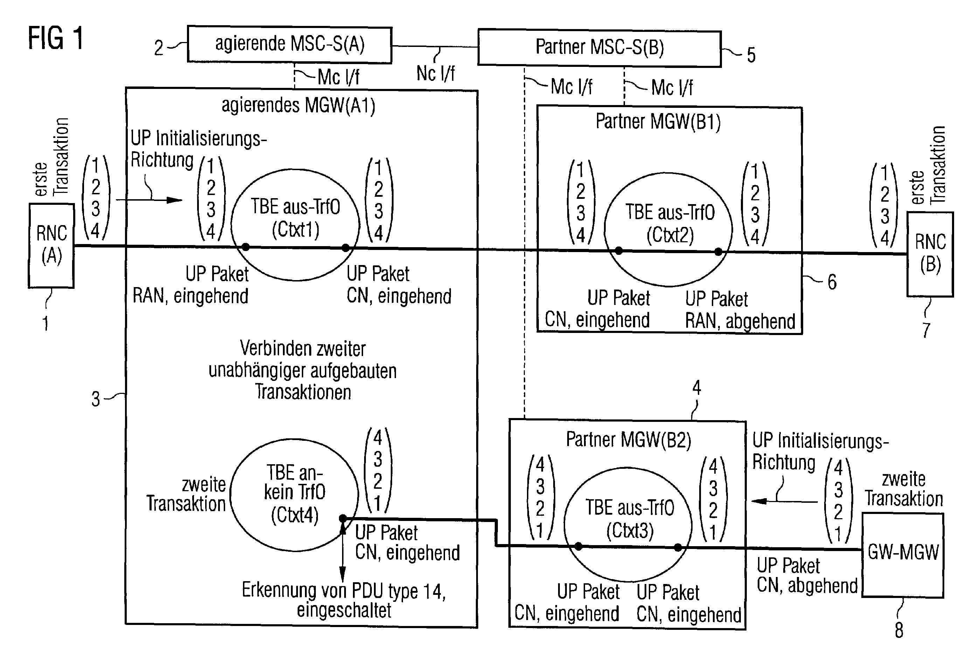

Figur 1 zeigt die Ausgangsbedingung mit zwei aktiven Verbindungsteilen an einem Media-Gateway 3 bei einer End-to-End-Verbindung in einem mobilen Kommunikationsnetz, die unabhängig von einander aufgebaut wurden. Der erste Verbindungspfad ist für eine agierende Verteilereinrichtungs-Steuerung (MSC-S) 2 ein mobil entstehender Anruf (mobile originating call) und der zweiten Verbindungspfad ein mobil abschließender Anruf (mobile terminating call). Die Initialisierung des User Planes wird in der Richtung durchgeführt, in die der Anruf aufgebaut wurde, d. h. in vorwärts Richtung (uplink-Richtung). Bei dem hier angewendeten User Plan handelt es sich um ein Inband Protokoll, das über die entsprechende Transportverbindung übertragen wird und das sogenannte RFCI (RAB subFlow Kombination Indikator) mapping, der Modifizierungs-Prozedur, definiert. RFCI mapping ist die Zuweisung der einzelnen Codec - und Codec Mode Einstellungen auf ein abgekürztes Format, um beim nachfolgenden Datenverkehr - Zuschlag (overhead) zu sparen bzw. um ein Umschalten zwischen zwei Modi so rasch als möglich zu erreichen. Bei dem ersten Verbindungsteil werden die Sprachdaten ohne Transcodierung von einem Mobilfunkendgerät eines Partners A über eine Funk-Netzwerk-Kontrolleinheit (RNC (A)) 1 bis über eine Funk-Netzwerk-Kontrolleinheit (RNC (B)) 7 zu einem Mobilfunkendgerät eines Partners B übermittelt. Beim zweiten Verbindungsteil werden die Sprachdaten ohne Transcodierung bis zu einem agierenden Media-Gateway 3 übertragen. Die Übertragung von Daten ohne Transcodierung wird allgemein als "transcoder free operation" bezeichnet.

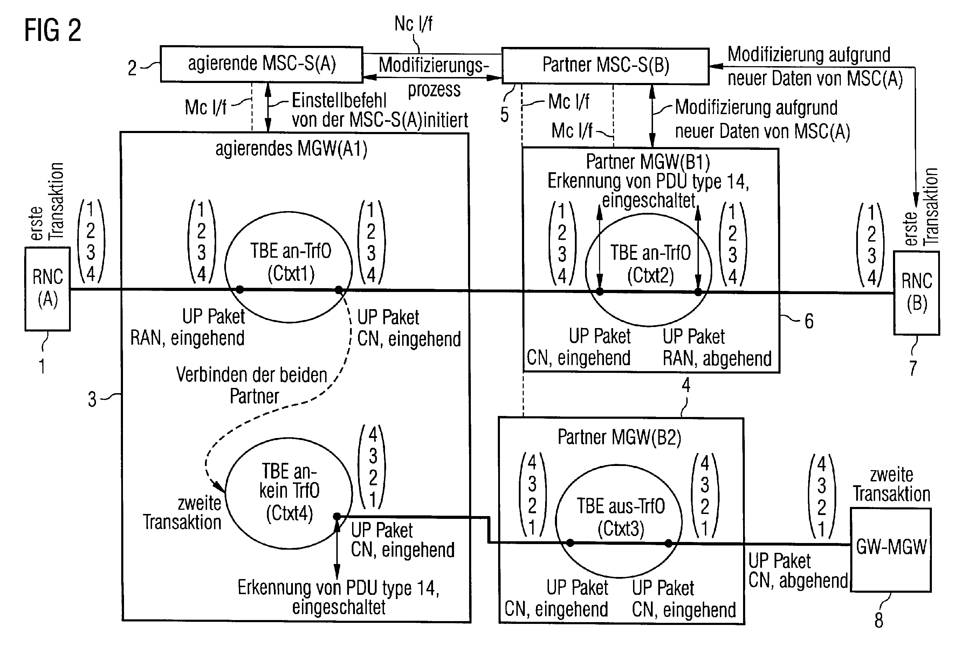

Figur 2 zeigt, wie eine Funktion die beiden Partner bei einem Anruf eines Users A verbinden möchte. In der agierenden Verteilereinrichtungs-Steuerung (MSC-S) 2 wird überprüft, ob die Codec Typen und die Codec Modes für eine Verbindung zusammenpassen. Es kann jedoch nicht von der agierenden Verteilereinrichtungs-Steuerung (MSC-S) 2 überprüft werden, ob das RFCI mapping übereinstimmt, d. h. die Zuweisung der einzelnen Modi, da diese Modi bei der User Plane Initialisierung Inband beim Transport der Daten ausgetauscht werden. Es gibt nun die Möglichkeit, dass das Media-Gateway 3 einen Indikator an die agierende Verteilereinrichtungs-Steuerung (MSC-S) 2 sendet, und die Fehlanpassung damit meldet. Oder es wird unter einer Leistungsstörung (Default) eine Modifikation zum zweiten Partner gesendet. Da keine neuen Daten bezüglich der verwendeten Codec Modes und Codec Typen an eine Partner-Verteilereinrichtungs-Steuerung (MSC-S) 5 gesendet werden, ist eine Modifikation, ein RFCI mapping, nicht notwendig. Das Trans Break Equipment (TBE) muss jedoch aktiviert sein um eine weitere Re-Initialisierung des User Planes zu ermöglichen bzw. um eine Re-Initialisierung zu erkennen. Ein aktivierter TBE wird bei der Verbindungs-Initialisierungs-Phase eingerichtet oder während jeglicher Art von Codec- bzw. Codec-Mode-Modifikationen in einem Netzwerk. In stabilen Verbindungs-Szenarien kann das TBE auf den transparenten Transmissions-Modus umschalten und dadurch werden keine PDU type 14 frames mehr evaluiert. Das TBE kann optional bei einer Transcoder-freien-Operation vom Media-Gateway abgeschaltet werden.

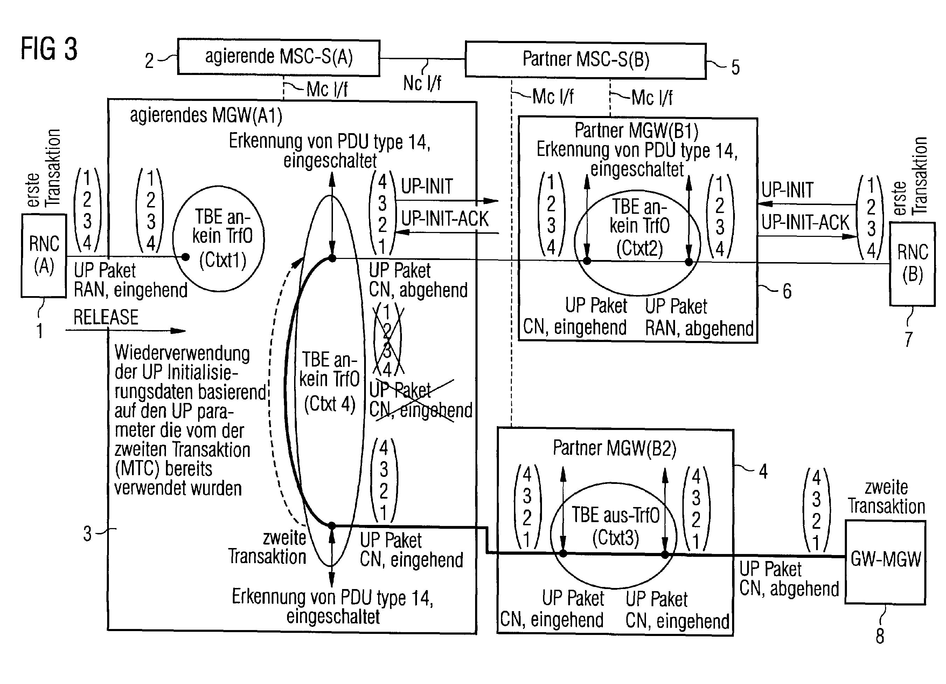

Figur 3 zeigt, wie die beiden Verbindungsteile miteinander verbunden sind und die Initialisierung des User Planes durchgeführt wird. Dies geschieht mit den Daten bezüglich Codec Modes und Codec Typen des Partners. Es wird der Anruf-Abschnitt (Call Leg) des mobilen entstehenden Anruf (mobile originating call) Verbindungsteil verwendet, da die Initialisierung in der gleichen Richtung zu senden ist, die auch für den Verbindungsaufbau verwendet wurde.

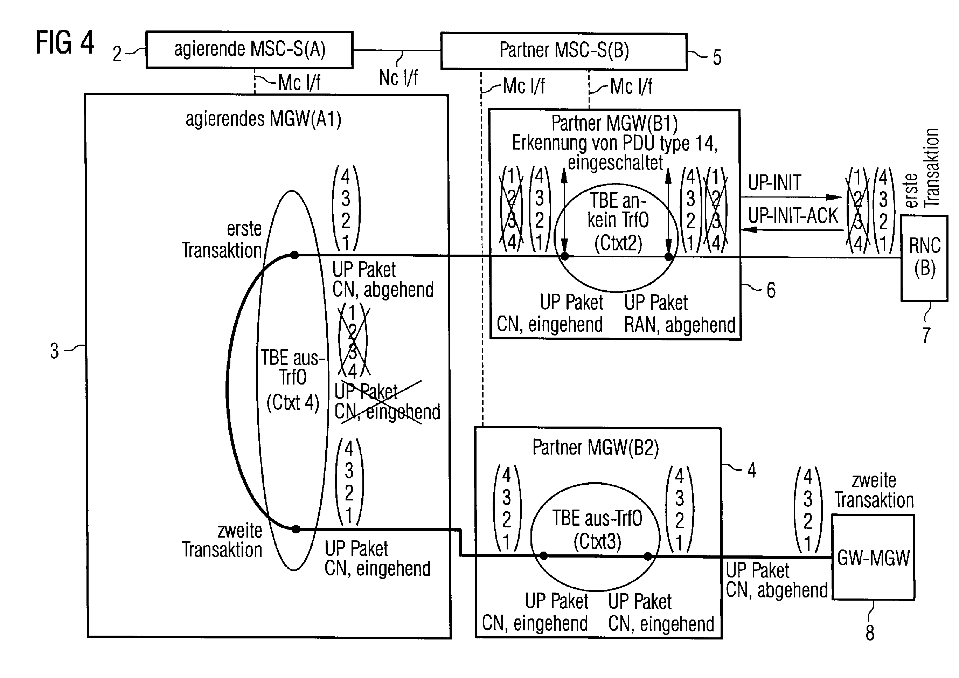

Figur 4 zeigt die optionale RFCI-Werte-Korrektur. Diese wird durchgeführt, wenn beide Verbindungsteile miteinander verbunden sind und die Initialisierung des User Planes durchgeführt wird. Die Anpassung der RFCI-Werte erfolgt in einem agierenden Media-Gateway 3 und wird gesteuert von einer agierenden Verteilereinrichtungs-Steuerung (MSC-S) 2. Mittels einer NC I/f - Schnittstelle wird eine der agierenden Verteilereinrichtungs-Steuerung (MSC-S) 2 nachfolgenden Verteilereinrichtungs-Steuerung (MSC-S) 5 über die Korrektur der RFCI-Werte informiert, die seinerseits die Information an ein nachfolgendes Media-Gateway 6 weiterleitet.

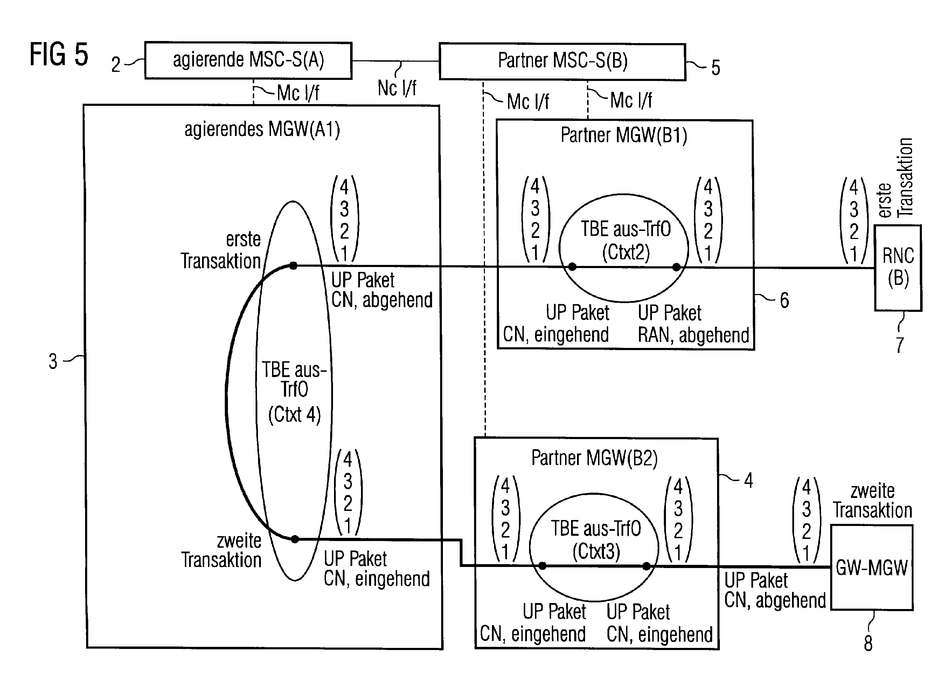

Figur 5 zeigt den Endzustand, d. h. Herstellung eines Transcoder-freien-Operations-Modus.

## Patentansprüche

1. Verfahren zur Aufrechterhaltung eines Transcoder-freien-Operations-Modus bei einer End-to-End-Verbindung in einem mobilen Kommunikationsnetz,
**dadurch gekennzeichnet,**
**dass** bei mindestens zwei Verbindungsteilen einer End-to-End-Verbindung an einem Media-Gateway jeweils eine Angabe in einem Übermittlungs-Protokoll betreffend die in den Verbindungen zu verwendenden Codec Modes in einer Verteilereinrichtungs-(MSC)-Steuerung verglichen wird,
**dass** bei unterschiedlichen Angaben betreffend die zu verwendenden Codec Modes eine Signalisierung an ein Trans Break Equipment (TBE) durchgeführt wird und
**dass** von dem Trans Break Equipment für die Verbindungsteile übereinstimmende Codec Modes festgelegt werden.

2. Verfahren nach Anspruch 1,
**dadurch gekennzeichnet,**
**dass** das Festlegen der Angaben betreffend die zu verwendenden Codec Modes immer, wenn es eine zweite Verbindung gibt, durchgeführt wird.

3. Verfahren nach einem der vorhergehenden Ansprüche,
**dadurch gekennzeichnet,**
**dass** zur Signalisierung an ein Trans Break Equipment eine Nc-Schnittstelle verwendet wird.

4. Verfahren nach einem der vorhergehenden Ansprüche,
**dadurch gekennzeichnet,**
**dass** das Festlegen der Angaben betreffend die zu verwendenden Codec Modes über eine Mc-Schnittstelle durchgeführt wird.

5. Verfahren nach einem der vorhergehenden Ansprüche,
**dadurch gekennzeichnet,**
**dass** eine Verteilereinrichtung ein Media-Gateway umfasst.

6. Verfahren nach einem der vorhergehenden Ansprüche,
**dadurch gekennzeichnet,**
**dass** das Übermittlungs-Protokoll ein Benutzer-Plan-Protokoll (User Plan Protocol) ist.

7. Verfahren nach einem der vorhergehenden Ansprüche,
**dadurch gekennzeichnet,**
**dass** der RAB-subFlow-Kombinations-Indikator (RFCI) als Angabe betreffend die zu verwendenden Codec Modes verwendet wird.

8. Verfahren nach einem der vorhergehenden Ansprüche,
**dadurch gekennzeichnet,**
**dass** das Festlegen der Angaben betreffend die zu verwendenden Codec Modes in Downlink-Richtung durchgeführt wird.

9. Vorrichtung zur Aufrechterhaltung eines Transcoder-freien-Operations-Modus bei einer End-to-End-Verbindung in einem mobilen Kommunikationsnetz,
mit einer Verteilereinrichtungs-Steuerung zum Vergleichen von Angaben in einem Übermittlungsprotokoll betreffend die in mindestens zwei Verbindungsteilen bei einer End-to-End-Verbindung zu verwendenden Codec Modes in einem anliegenden Media-Gateway und zum Signalisieren des Vorliegens unterschiedlicher Angaben betreffend die zu verwendenden Codec Modes an einem Trans Break Equipment zum Festlegen von übereinstimmende Codec Modes in den Verbindungsteilen.

10. Vorrichtung nach einem der vorhergehenden Ansprüche,
**dadurch gekennzeichnet,**
**dass** das Media Gateway eine Einrichtung einer Verteilereinrichtung ist.
